# EUROPÄISCHE PATENTSCHRIFT

(11) **EP 3 132 954 B1**
(45) Veröffentlichungstag und Bekanntmachung des Hinweises auf die Patenterteilung: **13.06.2018**
(21) Anmeldenummer: 16181737.4
(22) Anmeldetag: 28.07.2016
(51) Int. Cl.: B60G 11/26, B60G 17/005, B60G 17/018

(54) **STEUEREINRICHTUNG EINER FAHRZEUGFEDERUNG**
CONTROL DEVICE OF A VEHICLE SUSPENSION
DISPOSITIF DE COMMANDE ET SUSPENSION DE VEHICULE

(30) Priorität: 20.08.2015 DE 102015215872
(43) Veröffentlichungstag der Anmeldung: 22.02.2017
(73) Patentinhaber: Deere & Company, Moline, IL 61265 (US)
(72) Erfinder: Von Holst, Christian, 67310 Hettenleidelheim (DE); Hegler, Tobias, 67454 Hassloch (DE); Klittich, Mathias, 68161 Mannheim (DE); Kremb, Michael, 67806 Rockenhausen (DE); Rössel, Norman, 68167 Mannheim (DE); Wehle, Andreas, 69229 Nussloch (DE); Wolf, Günther, 67549 Worms (DE)
(74) Vertreter: Dehnhardt, Florian Christopher

(56) Entgegenhaltungen:
- EP-A1- 2 896 839
- DE-A1- 10 106 706
- DE-A1-102006 051 894
- DE-B3- 10 320 954

## Beschreibung

Die Erfindung betrifft eine Steuereinrichtung einer Fahrzeugfederung gemäß dem Oberbegriff des Anspruchs 1, mit einer Federungseinrichtung, die zwischen einer tragenden Fahrzeugstruktur und einem demgegenüber beweglich gelagerten Fahrzeugteil angebracht ist, und mit einer elektrisch betätigbaren Blockiereinrichtung zur Sperrung einer an der Federungseinrichtung auftretenden Ein- und/oder Ausfederbewegung entsprechend eines an eine Kontrolleinheit übermittelten Sperrbefehls. Derartige Steuereinrichtungen sind bekannt, z.B. aus der DE 101 06 706 A1 oder aus der EP 2 896 839 A1.

Derartige Steuereinrichtungen sind insbesondere bei landwirtschaftlichen Traktoren mit gefederter Vorderachse üblich. So ist es insbesondere bei der Durchführung von Ladearbeiten mit einem Frontlader wünschenswert, ein aufgrund wechselnder Beladung verursachtes unkontrolliertes Ein- und Ausfedern an der gefederten Vorderachse durch Sperrung der Radfederung zu unterbinden. Wird die Sperrung aufgehoben, beispielsweise zum Zwecke der Durchführung einer anschließenden Straßentransportfahrt, so besteht die Möglichkeit, dass es zu einer plötzlichen Expansion bzw. Kompression der Federungseinrichtung kommt, falls sich die Lastverhältnisse an der gefederten Vorderachse seit dem Zeitpunkt der Sperrung verändert haben. Die damit einhergehende Lageänderung des landwirtschaftlichen Traktors ist für den Bediener bzw. umstehende Personen überraschend und wird daher unter Umständen als bedrohlich empfunden.
Es ist daher Aufgabe, eine bezüglich ihres Entsperrverhaltens verbesserte Steuereinrichtung der eingangs genannten Art anzugeben.

Diese Aufgabe wird durch eine Steuereinrichtung einer Fahrzeugfederung mit den Merkmalen des Patentanspruchs 1 gelöst.

Die Steuereinrichtung einer Fahrzeugfederung umfasst eine Federungseinrichtung, die zwischen einer tragenden Fahrzeugstruktur und einem demgegenüber beweglich gelagerten Fahrzeugteil angebracht ist, und eine Blockiereinrichtung zur Sperrung einer an der Federungseinrichtung auftretenden Ein- und/oder Ausfederbewegung entsprechend eines an eine Kontrolleinheit übermittelten Sperrbefehls. Erfindungsgemäß bestimmt die Kontrolleinheit bei Setzen des Sperrbefehls eine für eine momentane Belastung der Federungseinrichtung charakteristische Lastgröße und legt diese als zugehörigen Wert in einer Speichereinheit ab, wobei die Kontrolleinheit bei Zurücksetzen des Sperrbefehls erneut einen Wert für die Lastgröße ermittelt, um eine Sperrung der Federungseinrichtung nach Maßgabe des Ergebnisses eines Vergleichs mit dem in der Speichereinheit abgelegten Wert aufzuheben.

Auf diese Weise lässt sich ausgehend vom Grad der Abweichung zwischen den beiden für die Lastgröße ermittelten Werten beurteilen, ob im Falle der Aufhebung der Sperrung aufgrund zwischenzeitlich veränderter Lastverhältnisse mit einer plötzlichen Expansion bzw. Kompression der Federungseinrichtung zu rechnen ist, sodass gegebenenfalls geeignete Gegenmaßnahmen ergriffen werden können. Hierzu überprüft die Kontrolleinheit, ob ein für die Abweichung der beiden Werte vorgegebener kritischer Grenzwert überschritten ist.

Vorteilhafte Ausführungen der erfindungsgemäßen Steuereinrichtung gehen aus den Unteransprüchen hervor.

Vorzugsweise erfolgt die Aufhebung der Sperrung seitens der Kontrolleinheit nach Maßgabe des Vergleichsergebnisses sukzessive unter Einhaltung einer vorgegebenen Entsperrsequenz, insbesondere innerhalb einer von dem Vergleichsergebnis abhängigen Zeitspanne. Die sukzessive Aufhebung der Sperrung kann entweder schrittweise oder aber kontinuierlich durchgeführt werden, wobei die Zeitspanne umso länger gewählt wird je größer die Abweichung zwischen den für die Lastgröße ermittelten Werten ist. Hierdurch ist sichergestellt, dass die Expansion bzw. Kompression der Federungseinrichtung nicht schlagartig, sondern dem Umfang der veränderten Lastverhältnisse entsprechend verzögert erfolgt.

Zusätzlich kann die Kontrolleinheit die Ausgabe einer auf die Aufhebung der Sperrung hinweisenden Fahrerinformation veranlassen. Die Ausgabe der Fahrerinformation erfolgt akustisch und/oder optisch über ein in einer Fahrzeugkabine angeordnetes Bedienerinterface.

Typischerweise handelt es sich bei der Federungseinrichtung um ein hydraulisches Federbein einer Rad- oder Kabinenfederung eines landwirtschaftlichen Nutzfahrzeugs. Eine derartige Radfederung findet beispielsweise in landwirtschaftlichen Traktoren des Herstellers John Deere als Bestandteil einer sogenannten TLS-Achse (Triple Link Suspension) Verwendung. Die TLS-Achse umfasst eine pendelnd aufgehängte Starrachse, die mittels zweier doppeltwirkender Hydraulikzylinder gegenüber einem Fahrzeugrahmen gelenkig abgestützt ist. Jeder der Hydraulikzylinder weist eine ringraumseitige sowie eine zylinderraumseitige Arbeitskammer auf, wobei die beiden Arbeitskammern mit jeweils zugehörigen Membranspeichern zusammenwirken. Die ringraumseitigen Arbeitskammern sind zur Erzielung einer gewünschten Federungscharakteristik mit einem vorgebbaren Vorspanndruck beaufschlagbar. Ein Niveauregelsystem erlaubt eine Veränderung der Druckverhältnisse innerhalb der zylinderraumseitigen Arbeitskammern und damit eine Einstellung der Lage des Fahrzeugrahmens gegenüber dem Erdboden. Sollte die Aufhebung der Sperrung zu einer Abweichung von der gewünschten Lage des Fahrzeugrahmens oder des vorgegebenen Vorspanndrucks führen, so erfolgt erforderlichenfalls zunächst eine Anpassung des Vorspanndrucks und danach eine Wiederherstellung der gewünschten Lage des Fahrzeugrahmens seitens des Niveauregelsystems.

An dieser Stelle sei angemerkt, dass die TLS-Achse nur eine von vielen Einsatzmöglichkeiten für die erfindungsgemäße Steuereinrichtung darstellt. Vielmehr lässt sich diese mit Rad- oder Kabinenfederungen beliebiger Bauart verwenden.

Die Blockiereinrichtung kann ein zwischen einer Arbeitskammer des hydraulischen Federbeins und einem Membranspeicher angeordnetes 3/2-Wegeventil oder Proportionalventil umfassen. Im Falle der zuvor beschriebenen doppeltwirkenden Hydraulikzylinder ist das 3/2-Wegeventil oder das Proportionalventil typischerweise in einer Hydraulikleitung zwischen zylinderraumseitiger Arbeitskammer und zugehörigem Membranspeicher angeordnet. Während das Proportionalventil eine im Wesentlichen kontinuierliche Variation seines Öffnungsquerschnitts erlaubt, ist das 3/2-Wegeventil zwischen einer undurchlässigen Sperrstellung, einer gedrosselten Durchlassstellung sowie einer ungedrosselten Durchlassstellung umschaltbar, was es erlaubt, den Öffnungsquerschnitt im Sinne der Herstellung eines schrittweisen Druckausgleichs mit dem Membranspeicher dreistufig anzupassen. Die sukzessive Aufhebung der Sperrung erfolgt dann durch gezieltes Hin- und Herschalten bzw. Modulieren des 3/2-Wegeventils zwischen den drei Ventilstellungen. Im Vergleich dazu wird das Proportionalventil derart aufgesteuert, dass ein schleichender Druckausgleich mit dem Membranspeicher erfolgt.

Um bei gesperrter Federungseinrichtung für den Fall längerer Standzeiten leckagebedingte Lageänderungen zwischen der tragenden Fahrzeugstruktur und dem demgegenüber beweglich gelagerten Fahrzeugteil zu unterbinden, weist das 3/2-Wegeventil oder das Proportionalventil bevorzugt eine sitzdichte Sperrstellung auf.

Vorzugsweise gibt der für die Lastgröße ermittelte Wert eine betragliche Differenz der zwischen gegenüberliegenden Arbeitskammern des hydraulischen Federbeins herrschenden Arbeitsdrücke wieder. Im Falle der bereits erwähnten doppeltwirkenden Hydraulikzylinder erfolgt die Erfassung der Arbeitsdrücke mittels den ringraumseitigen bzw. zylinderraumseitigen Arbeitskammern zugeordneten Drucksensoren, deren Sensorsignale der Kontrolleinheit zur Auswertung zugeführt werden.

Das Setzen oder Zurücksetzen des Sperrbefehls kann aufgrund einer manuellen Bedienervorgabe und/oder selbsttätig bei Erkennung eines auf eine wechselnde Belastung der Federungseinrichtung hinweisenden Betriebszustands erfolgen. Letzteres ist beispielsweise bei einem Frontladerbetrieb eines landwirtschaftlichen Traktors der Fall. Gleiches gilt für die Anbringung von Frontgewichten oder landwirtschaftlichen Anbaugeräten.

Darüber hinaus besteht die Möglichkeit, dass die Kontrolleinheit im Falle der Sperrung der Federungseinrichtung ein zur Fahrtgeschwindigkeitsbegrenzung vorgesehenes Zustandssignal ausgibt. Das Zustandssignal kann einem Motorsteuergerät zugeführt werden, das die Drehzahl eines Fahrzeugmotors bei Erreichen einer durch das Zustandssignal gesetzten maximalen Fahrtgeschwindigkeit abregelt, sodass ein bei gesperrter Federungseinrichtung erhöhter fahrtbedingter Schwingungseintrag seines Umfangs nach begrenzt wird. Die maximale Fahrtgeschwindigkeit liegt hierzu typischerweise in der Größenordnung von 30 km/h.

Auch ist es denkbar, dass die Kontrolleinheit die Sperrung und/oder die Aufhebung der Sperrung ausschließlich bei Vorliegen eines auf einen Fahrzeugstillstand hinweisenden Zustandssignals vornimmt, sodass sichergestellt ist, dass die Federungseinrichtung nicht außerhalb ihres Gleichgewichtszustands und damit in gespanntem Zustand arretiert bzw. freigegeben wird. Das Vorliegen des Fahrzeugstillstands - wie auch das Erreichen der vorgenannten Fahrtgeschwindigkeitsbegrenzung - wird seitens der Kontrolleinheit durch Auswertung der von Raddrehzahlsensoren bereitgestellten Drehzahlsignale erkannt.

Die erfindungsgemäße Steuereinrichtung wird im Folgenden anhand der beigefügten Zeichnungen näher erläutert. Hierbei bezeichnen identische Bezugszeichen baulich übereinstimmende Komponenten bzw. Komponenten mit vergleichbarer Funktion. Es zeigen:
- Fig. 1: ein erstes Ausführungsbeispiel der erfindungsgemäßen Steuereinrichtung einer Fahrzeugfederung, und
- Fig. 2: ein zweites Ausführungsbeispiel der erfindungsgemäßen Steuereinrichtung einer Fahrzeugfederung.

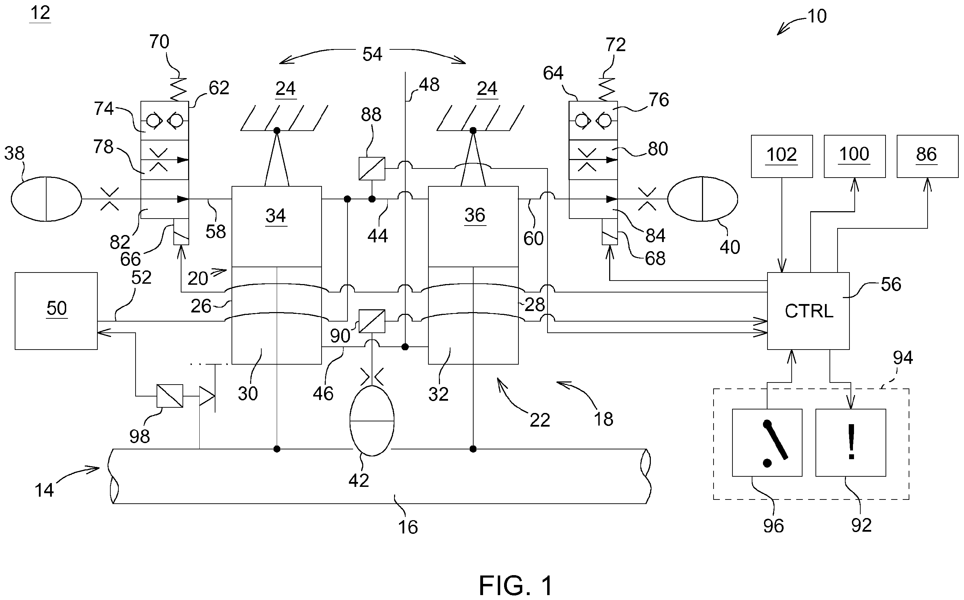

Fig. 1 zeigt ein erstes Ausführungsbeispiel der erfindungsgemäßen Steuereinrichtung einer Fahrzeugfederung.

Beispielsgemäß ist die Steuereinrichtung 10 Bestandteil eines als landwirtschaftlicher Traktor 12 ausgebildeten (nicht dargestellten) landwirtschaftlichen Nutzfahrzeugs. Der landwirtschaftliche Traktor 12 weist eine Fahrzeugfederung mit einer gefederten Vorderachse 14 auf, bei der es sich vorliegend um eine sogenannte TLS-Achse (Triple Link Suspension) handelt. Die TLS-Achse umfasst eine pendelnd aufgehängte Starrachse 16, die mittels einer Federungseinrichtung 18 in Gestalt zweier hydraulischer Federbeine 20, 22 gegenüber einer tragenden Fahrzeugstruktur, genauer gesagt einem Fahrzeugrahmen 24 des landwirtschaftlichen Traktors 12 gelenkig abgestützt ist. Jedes der als doppeltwirkende Hydraulikzylinder 26, 28 ausgebildeten hydraulischen Federbeine 20, 22 weist eine ringraumseitige Arbeitskammer 30, 32 sowie eine zylinderraumseitige Arbeitskammer 34, 36 auf, wobei die beiden zylinderraumseitigen Arbeitskammern 34, 36 mit separaten Membranspeichern 38, 40 und die beiden ringraumseitigen Arbeitskammern 30, 32 mit einem gemeinsamen Membranspeicher 42 zusammenwirken. Die ringraumseitigen Arbeitskammern 30, 32 bzw. zylinderraumseitigen Arbeitskammern 34, 36 stehen jeweils über zugehörige Hydraulikleitungen 44, 46 miteinander in Verbindung.

Die ringraumseitigen Arbeitskammern 30, 32 der Hydraulikzylinder 26, 28 sind zur Erzielung einer gewünschten Federungscharakteristik über eine erste Hydraulikversorgungsleitung 48 mit einem vorgebbaren Vorspanndruck beaufschlagbar. Zur Vorgabe des Vorspanndrucks stehen drei unterschiedliche Druckstufen zur Verfügung, die verschiedenen Beladungszuständen des landwirtschaftlichen Traktors 12 Rechnung tragen. Ein Niveauregelsystem 50 erlaubt ferner eine Veränderung der Druckverhältnisse innerhalb der zylinderraumseitigen Arbeitskammern 34, 36 der Hydraulikzylinder 26, 28 und damit eine Einstellung der Lage des Fahrzeugrahmens 24 gegenüber dem Erdboden, indem der Druck in den zylinderraumseitigen Arbeitskammern 34, 36 über eine zweite Hydraulikversorgungsleitung 52 entsprechend variiert wird.

Des Weiteren umfasst die Steuereinrichtung 10 eine Blockiereinrichtung 54. Diese erlaubt eine Sperrung einer an den Hydraulikzylindern 26, 28 auftretenden Ein- und/oder Ausfederbewegung entsprechend eines an eine Kontrolleinheit 56 übermittelten Sperrbefehls.

Gemäß der in Fig. 1 dargestellten ersten Ausführungsform der Steuereinrichtung 10 umfasst die Blockiereinrichtung 54 für jeden der beiden Hydraulikzylinder 26, 28 ein in einer Hydraulikleitung 58, 60 zwischen der zylinderraumseitigen Arbeitskammer 34, 36 und dem zugehörigen Membranspeicher 38, 40 angeordnetes 3/2-Wegeventil 62, 64. Das 3/2-Wegeventil 62, 64 ist durch geeignete Bestromung eines Solenoids 66, 68 entgegen der Wirkung einer Rückstellfeder 70, 72 zwischen einer undurchlässigen Sperrstellung 74, 76, einer gedrosselten Durchlassstellung 78, 80 sowie einer ungedrosselten Durchlassstellung 82, 84 umschaltbar, was es erlaubt, den Öffnungsquerschnitt zur Herstellung eines Druckausgleichs zwischen der zylinderraumseitigen Arbeitskammer 34, 36 und dem zugehörigen Membranspeicher 38, 40 dreistufig zu variieren. Die undurchlässige Sperrstellung 74, 76 ist hierbei sitzdicht ausgeführt.

Die Sperrung der Federungseinrichtung 18 erfolgt durch Setzen des Sperrbefehls, woraufhin die Kontrolleinheit 56 zunächst die momentane Belastung der Hydraulikzylinder 26, 28 auf Grundlage einer hierfür charakteristischen Lastgröße bestimmt und als zugehörigen Wert in einer Speichereinheit 86 abgelegt.

Der für die Lastgröße ermittelte Wert gibt hierbei eine betragliche Differenz der zwischen den ringraumseitigen Arbeitskammern 30, 32 und den zylinderraumseitigen Arbeitskammern 34, 36 der Hydraulikzylinder 26, 28 herrschenden Arbeitsdrücke pᵣ, p_{z} wieder. Die Erfassung der Arbeitsdrücke pᵣ, p_{z} erfolgt mittels zugehöriger Drucksensoren 88, 90, deren Sensorsignale der Kontrolleinheit 56 zur Auswertung zugeführt werden.

Umgekehrt erfolgt die Aufhebung der Sperrung der Federungseinrichtung 18 durch Zurücksetzen des Sperrbefehls, woraufhin die Kontrolleinheit 56 erneut einen Wert für die Lastgröße ermittelt und mit dem in der Speichereinheit 86 abgelegten Wert vergleicht. Ausgehend vom Grad der Abweichung zwischen den beiden für die Lastgröße ermittelten Werten nimmt die Kontrolleinheit 56 eine Beurteilung dahingehend vor, ob im Falle der Aufhebung der Sperrung mit einer plötzlichen Expansion bzw. Kompression der Federungseinrichtung 18 zu rechnen ist. Hierzu überprüft die Kontrolleinheit 56, ob ein für die Abweichung der beiden Werte vorgegebener kritischer Grenzwert überschritten ist.

Ist dies der Fall, so hebt die Kontrolleinheit 56 die Sperrung der Federungseinrichtung 18 sukzessive unter Einhaltung einer vorgegebenen Entsperrsequenz auf, und zwar zunächst durch mehrfaches Hin- und Herschalten bzw. Modulieren der 3/2-Wegeventile 62, 64 zwischen der undurchlässigen Sperrstellung 74, 76 und der gedrosselten Durchlassstellung 78, 80 und anschließendes Umschalten in die ungedrosselte Durchlassstellung 82, 84, wodurch ein schrittweiser Druckausgleich zwischen den zylinderraumseitigen Arbeitskammern 34, 36 und den zugehörigen Membranspeichern 38, 40 erfolgt. Die Durchführung der Entsperrsequenz kann innerhalb einer vorgebbaren Zeitspanne erfolgen, wobei diese umso länger gewählt wird je größer die Abweichung zwischen den beiden für die Lastgröße ermittelten Werten ist.

Zusätzlich veranlasst die Kontrolleinheit 56 die Ausgabe einer auf die Aufhebung der Sperrung hinweisenden Fahrerinformation 92. Die Ausgabe der Fahrerinformation 92 erfolgt akustisch und/oder optisch über ein in einer Fahrzeugkabine angeordnetes Bedienerinterface 94.

Stellt die Kontrolleinheit 56 hingegen fest, dass der für die Abweichung der beiden Werte vorgegebene kritische Grenzwert nicht überschritten ist, kann auf im Wesentlichen unveränderte Lastverhältnisse an der gefederten Vorderachse 14 geschlossen werden, und die 3/2-Wegeventile 62, 64 werden von der Kontrolleinheit 56 unmittelbar aus der undurchlässigen Sperrstellung 74, 76 in die ungedrosselte Durchlassstellung 82, 84 umgeschaltet.

Das Setzen bzw. Zurücksetzen des Sperrbefehls erfolgt aufgrund einer am Bedienerinterface 94 vorgenommenen manuellen Bedienervorgabe 96 und/oder selbsttätig bei Erkennung eines auf eine wechselnde Belastung der Federungseinrichtung 18 hinweisenden Betriebszustands. Letzteres ist beispielsweise bei einem beabsichtigten Frontladerbetrieb des landwirtschaftlichen Traktors 12 der Fall.

Sollte die Aufhebung der Sperrung zu einer Veränderung der Lage des Fahrzeugrahmens 24 oder des Vorspanndrucks führen, so erfolgt erforderlichenfalls zunächst eine Anpassung des Vorspanndrucks und danach eine Wiederherstellung der gewünschten Lage des Fahrzeugrahmens 24 seitens des Niveauregelsystems 50. Die Einhaltung der gewünschten Lage wird hierbei mittels eines mit dem Niveauregelsystem 50 verbundenen Lagesensors 98 überwacht.

Daneben gibt die Kontrolleinheit 56 im Falle der Sperrung der Federungseinrichtung 18 ein zur Fahrtgeschwindigkeitsbegrenzung vorgesehenes Zustandssignal aus. Das Zustandssignal wird einem Motorsteuergerät 100 zugeführt, das die Drehzahl eines Fahrzeugmotors bei Erreichen einer durch das Zustandssignal gesetzten maximalen Fahrtgeschwindigkeit abregelt. Die maximale Fahrtgeschwindigkeit liegt in der Größenordnung von 30 km/h.

Die Kontrolleinheit 56 nimmt die Sperrung und/oder die Aufhebung der Sperrung ausschließlich bei Vorliegen eines auf einen Fahrzeugstillstand hinweisenden Zustandssignals vor. Das Vorliegen des Fahrzeugstillstands - wie auch das Erreichen der vorgenannten Fahrtgeschwindigkeitsbegrenzung - wird seitens der Kontrolleinheit 56 durch Auswertung der von Raddrehzahlsensoren 102 bereitgestellten Drehzahlsignale erkannt.

Der Vollständigkeit halber sei angemerkt, dass es sich anstelle einer pendelnd aufgehängten Starrachse 16 auch um ein beliebiges anderes Fahrzeugteil einer Rad- oder Kabinenfederung des landwirtschaftlichen Nutzfahrzeugs handeln kann, das mittels einer entsprechenden Federungseinrichtung gegenüber der tragenden Fahrzeugstruktur beweglich gelagert ist, so zum Beispiel eine gefederte Fahrzeugkabine oder ein Radträger einer Einzelradaufhängung.

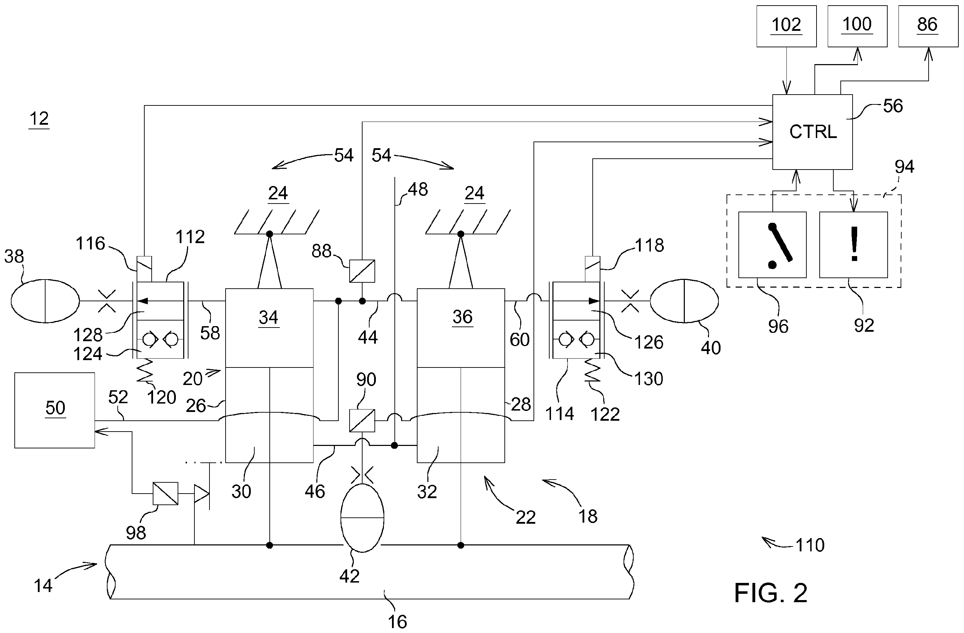

Fig. 2 zeigt ein zweites Ausführungsbeispiel der erfindungsgemäßen Steuereinrichtung einer Fahrzeugfederung. Die insofern vorgesehene Steuereinrichtung 110 unterscheidet sich gegenüber dem in Fig. 1 dargestellten ersten Ausführungsbeispiel lediglich in Bezug auf die Ausgestaltung der Blockiereinrichtung 54 sowie der von der Kontrolleinheit 56 durchgeführten Entsperrsequenz.

Demgemäß umfasst die Blockiereinrichtung 54 für jeden der beiden Hydraulikzylinder 26, 28 ein in der Hydraulikleitung 58, 60 zwischen der zylinderraumseitigen Arbeitskammer 34, 36 und dem zugehörigen Membranspeicher 38, 40 angeordnetes Proportionalventil 112, 114. Das Proportionalventil 112, 114 ist durch geeignete Bestromung eines Solenoids 116, 118 entgegen der Wirkung einer Rückstellfeder 120, 122 zwischen einer sitzdichten Sperrstellung 124, 126 und einer Durchlassstellung 128, 130 verschiebbar, was es erlaubt, den Öffnungsquerschnitt zur Herstellung eines Druckausgleichs zwischen der zylinderraumseitigen Arbeitskammer 34, 36 und dem zugehörigen Membranspeicher 38, 40 kontinuierlich zu variieren.

Zur Durchführung der Entsperrsequenz steuert die Kontrolleinheit 56 die Proportionalventile 112, 114 ausgehend von der Sperrstellung 124, 126 derart auf, dass ein schleichender Druckausgleich zwischen den zylinderraumseitigen Arbeitskammern 34, 36 und den zugehörigen Membranspeichern 38, 40 erfolgt. Anschließend werden die Proportionalventile 112, 114 in die Durchlassstellung 128, 130 verbracht, sodass ein ungehinderter Hydraulikfluss zwischen den zylinderraumseitigen Arbeitskammern 34, 36 und den zugehörigen Membranspeichern 38, 40 möglich ist.

Ist es hingegen aufgrund weitgehend unveränderter Lastverhältnisse an der gefederten Vorderachse 14 nicht erforderlich, die Entsperrsequenz durchzuführen, so werden die Proportionalventile 112, 114 von der Kontrolleinheit 56 unmittelbar aus der Sperrstellung 124, 126 in die Durchlassstellung 128, 130 umgeschaltet.

## Patentansprüche

1. Steuereinrichtung einer Fahrzeugfederung, mit einer Federungseinrichtung (18), die zwischen einer tragenden Fahrzeugstruktur (24) und einem demgegenüber beweglich gelagerten Fahrzeugteil (16) angebracht ist, und mit einer Blockiereinrichtung (54) zur Sperrung einer an der Federungseinrichtung (18) auftretenden Ein- und/oder Ausfederbewegung entsprechend eines an eine Kontrolleinheit (56) übermittelten Sperrbefehls, **dadurch gekennzeichnet, dass** die Kontrolleinheit (56) bei Setzen des Sperrbefehls eine für eine momentane Belastung der Federungseinrichtung (18) charakteristische Lastgröße bestimmt und als zugehörigen Wert in einer Speichereinheit (86) ablegt, wobei die Kontrolleinheit (56) bei Zurücksetzen des Sperrbefehls erneut einen Wert für die Lastgröße ermittelt, um eine Sperrung der Federungseinrichtung (18) nach Maßgabe des Ergebnisses eines Vergleichs mit dem in der Speichereinheit (86) abgelegten Wert aufzuheben.

2. Steuereinrichtung nach Anspruch 1, **dadurch gekennzeichnet, dass** die Aufhebung der Sperrung seitens der Kontrolleinheit (56) nach Maßgabe des Vergleichsergebnisses sukzessive unter Einhaltung einer vorgegebenen Entsperrsequenz, insbesondere innerhalb einer von dem Vergleichsergebnis abhängigen Zeitspanne erfolgt.

3. Steuereinrichtung nach Anspruch 2, **dadurch gekennzeichnet, dass** die Kontrolleinheit (56) die Ausgabe einer auf die Aufhebung der Sperrung hinweisenden Fahrerinformation (92) veranlasst.

4. Steuereinrichtung nach wenigstens einem der Ansprüche 1 bis 3, **dadurch gekennzeichnet, dass** es sich bei der Federungseinrichtung (18) um ein hydraulisches Federbein (20, 22) einer Rad- oder Kabinenfederung eines landwirtschaftlichen Nutzfahrzeugs (12) handelt.

5. Steuereinrichtung nach Anspruch 4, **dadurch gekennzeichnet, dass** die Blockiereinrichtung (54) ein zwischen einer Arbeitskammer (34, 36) des hydraulischen Federbeins (20, 22) und einem Membranspeicher (38, 40) angeordnetes 3/2-Wegeventil (62, 64) oder Proportionalventil (112, 114) umfasst.

6. Steuereinrichtung nach Anspruch 5, **dadurch gekennzeichnet, dass** das 3/2-Wegeventil (62, 64) oder das Proportionalventil (112, 114) bevorzugt eine sitzdichte Sperrstellung (74, 76; 124, 126) aufweist.

7. Steuereinrichtung nach Anspruch 4 oder 5, **dadurch gekennzeichnet, dass** der für die Lastgröße ermittelte Wert eine betragliche Differenz der zwischen gegenüberliegenden Arbeitskammern (30, 32, 34, 36) des hydraulischen Federbeins (20, 22) herrschenden Arbeitsdrücke wieder wiedergibt.

8. Steuereinrichtung nach wenigstens einem der Ansprüche 1 bis 7, **dadurch gekennzeichnet, dass** das Setzen oder Zurücksetzen des Sperrbefehls aufgrund einer manuellen Bedienervorgabe (96) und/oder selbsttätig bei Erkennung eines auf eine wechselnde Belastung der Federungseinrichtung (18) hinweisenden Betriebszustands erfolgt.

9. Steuereinrichtung nach wenigstens einem der Ansprüche 1 bis 8, **dadurch gekennzeichnet, dass** die Kontrolleinheit (56) im Falle der Sperrung der Federungseinrichtung (18) ein zur Fahrtgeschwindigkeitsbegrenzung vorgesehenes Zustandssignal ausgibt.

10. Steuereinrichtung nach wenigstens einem der Ansprüche 1 bis 9, **dadurch gekennzeichnet, dass** die Kontrolleinheit (56) die Sperrung und/oder die Aufhebung der Sperrung ausschließlich bei Vorliegen eines auf einen Fahrzeugstillstand hinweisenden Zustandssignals vornimmt.

11. Landwirtschaftliches Nutzfahrzeug, insbesondere landwirtschaftlicher Traktor, mit einer Steuereinrichtung (10; 110) nach wenigstens einem der Ansprüche 1 bis 10.

## Claims

1. Control device for a vehicle suspension system, having a suspension device (18) which is mounted between a load-bearing vehicle structure (24) and a vehicle part (16) which is moveable with respect to the latter, and having a locking device (54) for blocking a spring retraction and/or spring extension movement, occurring at the suspension device (18), in accordance with a blocking command which is transferred to a monitoring unit (56), **characterized in that** when the blocking command is set, the monitoring unit (56) determines a load variable which is characteristic of an instantaneous load of the suspension device (18) stores it as the associated value in a memory unit (86) wherein when the blocking command is reset, the monitoring unit (56) again determines a value for the load variable, in order to cancel blocking of the suspension device (18) in accordance with the result of a comparison with the value stored in the memory device (86).

2. Control device according to Claim 1, **characterized in that** the cancelling of the blocking by the monitoring unit (56) takes place successively in accordance with the comparison result by maintaining a predefined release sequence, in particular within a time period which is dependent on the comparison result.

3. Control device according to Claim 2 **characterized in that** the monitoring unit (56) brings about the outputting of driver information (92) which indicates the cancelling of the blocking.

4. Control device according to at least one of Claims 1 to 3, **characterized in that** the suspension device (18) is a hydraulic spring strut (20, 22) of a wheel or cab suspension system of an agricultural utility vehicle (12) .

5. Control device according to Claim 4, **characterized in that** the blocking device (54) comprises a 3/2-way valve (62, 64) or proportional valve (112, 114) which is arranged between a working chamber (34, 36) of the hydraulic spring strut (20, 22) and a diaphragm accumulator (38, 40).

6. Control device according to Claim 5, **characterized in that** the 3/2-way valve (62, 64) or the proportional valve (112, 114) preferably has a seat-tight blocking position (74, 76; 124, 126).

7. Control device according to Claim 4 or 5, **characterized in that** the value which is determined for the load variable represents again an absolute-value difference of the working pressures present between opposite working chambers (30, 32, 34, 36) of the hydraulic spring strut (20, 22).

8. Control device according to at least one of Claims 1 to 7, **characterized in that** the setting or resetting of the blocking command takes place on the basis of a manual operator control specification (96) and/or automatically when an operating state which indicates a changing load of the suspension device (18) is detected.

9. Control device according to at least one of Claims 1 to 8, **characterized in that** in the case of blocking the suspension device (18) the monitoring device (56) outputs a state signal which is provided for limiting the velocity.

10. Control device according to at least one of Claims 1 to 9, **characterized in that** the monitoring unit (56) carries out the blocking and/or the cancellation of the blocking exclusively when a state signal which indicates a stationary state of the vehicle is present.

11. Agricultural utility vehicle, in particular agricultural tractor, having a control device (10; 110) according to at least one of Claims 1 to 10.

## Revendications

1. Dispositif de commande d'une suspension de véhicule, comportant un dispositif de suspension (18) monté entre une structure de véhicule porteuse (24) et une partie de véhicule (16) montée mobile par rapport à celle-ci, et comportant un dispositif de blocage (54) destiné à bloquer un mouvement de compression et/ou de détente se produisant au niveau du dispositif de suspension (18) conformément à une instruction de blocage transmise à une unité de commande (56), **caractérisé en ce que** l'unité de commande (56) détermine une grandeur de charge caractéristique pour une charge instantanée du dispositif de suspension (18) et la mémorise en tant que valeur correspondante dans une unité de stockage (86), dans lequel l'unité de commande (56) détermine à nouveau une valeur pour la grandeur de charge lorsque l'instruction de blocage est réinitialisée pour interrompre le blocage du dispositif de suspension (18) conformément au résultat d'une comparaison avec la valeur mémorisée dans l'unité de stockage (86).

2. Dispositif de commande selon la revendication 1, **caractérisé en ce que** l'interruption du blocage est effectuée dans l'unité de commande (56) conformément au résultat de la comparaison, tout en maintenant une séquence de déblocage prédéterminée, en particulier pendant une période de temps dépendant du résultat de la comparaison.

3. Dispositif de commande selon la revendication 2, **caractérisé en ce que** l'unité de commande (56) déclenche la fourniture d'une information (92) destinée au conducteur indiquant que le blocage a été interrompu.

4. Dispositif de commande selon au moins l'une des revendications 1 à 3, **caractérisé en ce que** le dispositif de suspension (18) est un amortisseur hydraulique (20, 22) d'une suspension de roue ou de cabine d'un véhicule utilitaire agricole (12).

5. Dispositif de commande selon la revendication 4, **caractérisé en ce que** le dispositif de blocage (54) comprend une soupape à 3/2 voies (62, 64) ou une soupape proportionnelle (112, 114) disposée entre une chambre de travail (34, 36) de l'amortisseur hydraulique (20, 22) et un accumulateur à membrane (38, 40).

6. Dispositif de commande selon la revendication 5, **caractérisé en ce que** la soupape à 3/2 voies (62, 64) ou la soupape proportionnelle (112, 114) présente de préférence une position de fermeture étanche au siège (74, 76 ; 124, 126).

7. Dispositif de commande selon la revendication 4 ou 5, **caractérisé en ce que** la valeur déterminée pour la grandeur de charge représente la valeur d'une différence entre les pressions de travail régnant dans les chambres de travail opposées (30, 32, 34, 36) de l'amortisseur hydraulique (20, 22).

8. Dispositif de commande selon au moins l'une des revendications 1 à 7, **caractérisé en ce que** le réglage ou la remise à zéro de l'instruction de blocage s'effectue sur la base d'une consigne manuelle (96) et/ou automatiquement lors de la détection d'un état de fonctionnement indiquant une charge alternée sur le dispositif de suspension (18).

9. Dispositif de commande selon au moins l'une des revendications 1 à 8, **caractérisé en ce que** l'unité de commande (56) fournit un signal d'état destiné à limiter la vitesse de déplacement en cas de blocage du dispositif de suspension (18).

10. Dispositif de commande selon au moins l'une des revendications 1 à 9, **caractérisé en ce que** l'unité de commande (56) n'effectue le blocage et/ou l'interruption du blocage qu'en présence d'un signal d'état indiquant que le véhicule est à l'arrêt.

11. Véhicule utilitaire agricole, en particulier tracteur agricole, comportant un dispositif de commande (10 ; 110) selon au moins l'une des revendications 1 à 10.
